# EUROPEAN PATENT SPECIFICATION

(11) **EP 2 844 184 B1**
(45) Date of publication and mention of the grant of the patent: **31.07.2019**
(21) Application number: 12875879.4
(22) Date of filing: 02.05.2012
(51) Int. Cl.: A61C 8/00

(54) **OVAL PLATFORM DENTAL IMPLANT SYSTEM AND IT'S COMPONENTS**
ZAHNIMPLANTATSYSTEM MIT OVALER PLATTFORM UND DESSEN KOMPONENTEN
SYSTÈME D'IMPLANT DENTAIRE À PLATE-FORME OVALE ET SES COMPOSANTS

(43) Date of publication of application: 11.03.2015
(73) Proprietor: Rahgozar, Reza, Vancouver, BC V6H 2A2 (CA)
(72) Inventor: Rahgozar, Reza, Vancouver, BC V6H 2A2 (CA)
(74) Representative: reuteler & cie SA
(86) International application number: PCT/CA2012/050280
(87) International publication number: WO 2013/163719

(56) References cited:
- WO-A1-2010/048944
- US-A- 5 246 370
- US-A- 5 547 377
- US-A- 5 984 681
- US-A- 6 039 568
- US-A1- 2011 287 381

## Description

### Technical Field

Oral Surgery

### Background Art

Dental implants has been introduced to dentistry since 1960. Base on the shape, it has been always either blade shape or cylindrical with a round platform. By bonding to the bone through osseointegration process implant works as an anchor to support the super-structure element which is a crown or denture to replace the missing tooth. US5984681A1 discloses a dental implant system with the features according to preamble of claim 1.

### Disclosure

Blade shape implant has been used in very limited cases . Because of having a limitation in thickness (buccolingually) and being attached to the supra-structure element (Abutment), also due to instability against the functional forces after the surgical insertion, which compromises the process of Osseointegration (Bond between the bone and implant), rate of the implant fracture and Osseointegration failure has been always so high that in today's dentistry blade shape implant doesn't seem to be a choice of treatment anymore.

On the other hand the success rate of conventional cylindrical implants (Screw Type), due to initial mechanical stability in selected patient cases and having two pieces [implant and super-structure element (Abutment)which make it possible to leave the implant for proper osseointegration (bond between the implant and the bone)] has been high enough to overshadow the limitations of the round platform implants like, Poor proximal contour of the supported crown causing food retention under the crown and also hard access to reach the implant by patient for proper hygiene around the implant.

### Disclosure of Invention

### Technical Problem

### Technical- Problem

Technical problem In conventional cylindrical dental implants are as follow.

*Not providing enough support for the artificial crown to be formed more natural and anatomical especially at the proximal contact area with the adjacent structure(which is either natural tooth or neighboring implant), to protect the heath of the Gingival Papilla.

* Not providing enough support for the crown to have a more natural cleans able contour especially at the proximal area and at the same time not providing easy access for patient to have better hygiene around the implant at the gum level which will jeopardize the health of the bone and the soft tissue surrounding the implant.

* Necessity for bone graft to increase the amount of the bone to make it possible to use a wider diameter implant which in return increases the implant body surface for achieving more Osseointegration bond for increasing the anchorage and stability after 3 months of Osseointegration or (Healing process) to withstand the biting forces.

### Solution to Problem

### Technical- Solution

The invention is defined by a dental implant system of claim 1. Preferred embodiments are defined in the dependent claims.

Oval Platform Implant (OPI) is being introduced as a new category of dental implants in dentistry.

Base on the shape . structure, health of the hard and soft tissue and level of force distribution from the implant to the supporting bone which determines the amount of the bone loss after a few years, OPI seems to have a better chance of success in keeping the health of the surrounding hard and soft tissue in comparison to the traditional cylindrical implants.

### Advantageous Effects of Invention

### Advantageous Effects

### Advantages Of Oval Platform Implants.(OPI)

### 1. OPI. Creates support for better proximal contour of the supported crown.

Having a natural interproximal contour for posterior crowns supported by implants has always been a challenge for clinicians. By extending the implant/crown interface toward the interproximal area ,OPI creates more natural proximal contour which prevents from black triangle affect, which is causing a dark area at the proximal contact of the crown.

### 1. By correcting the proximal contour OPI. Creates better support for the interproximal bone which perverts interdental papilla from recession.

### 1. Easy access to implant by patient.

Food retention and hard access to reach the implant in the proximal area is always a problem for patient which sometimes complicates the hygiene around the implant. By moving the implant and abutment interface more proximally patient can have better access for cleaning the implant.

### 1. Supported crown by OPI can have wide facial contour at the cervical area

### 1. Less bone volume is necessary buccolingually to have same amount of osseointegration with wider implant.

Most of the time necessity for bone grafting and it's complications which may cause necessity for another bone graft surgery before having an implant is dentist and patient's major concern, which mostly results in redirecting the option of having an implant supporting crown toward a bridge.

From the other stand point, having a long treatment time by having a bone graft surgery and implant surgery without any complication takes at least 7.5 months which may cause the patient to look for faster treatments like a fix bridge with much shorter treatment time. OPI (Oval Platform Implant) can reduce the amount of the necessary bone volume buccolingually without jeopardizing the amount of the bone support by expanding the implant surface in contact with the bone, with a smaller diameter implant buccolingually which can withstand the same amount of the functional force like a wider diameter round platform implant after the bone graft. In another word by increasing implant surface, Oval platform implant compensates the use of smaller diameter implant which will give the dentist more freedom to perform implant surgery without bone grafting. This will result in a shorter treatment time by eliminating one bone graft surgery and 4 months of healing period after the bone graft which also will increase the chance of case acceptance by patient dramatically.

### 1. Load distribution would be much better than conventional implants

By having a wider implant surface mesiodistally (OPI)amount of lateral forces ( Para functional force) on the cortical bone will be less than conventional implants /sq mm.

### 1. Provides better support for the crown by having rectangular abutments instead of round abutments which reduces the rotational force on the crown.

In conventional implant one of the reasons for broken or lose screw is the rotational force on the crown ,which in OPI due to having a rectangular abutment, this rotational forces will be transferred to the implant and the bone instead of the abutment screw.

### 1. Provides a wide platform which accommodates two screws for securing the abutments on the implant.

OPI has 2 screw holes which will stabilize the abutment much stronger than one scrw retained abutment in conventional implan. This advantage also reduces the chance of lose or broken screw. Platform designs of the OPI can be internal or external depending on the level of the expected Vertical and lateral forces.(biting force).

### 1. Edentulous patients:

OPI can be used for edentulous patients which will reduce the number of the implants by having a wider osseointegration surface which will distributes the biting forces on a larger area of the bone.

### 1. With different surface design can increase the surface area.

To increase the surface area even more, Oval Platform Implant can have some roughness and perforations which will increase the bone growth and osseointegration between the implant and bone. Resulting in long term stability of the implant compare to the conventional implants .These perforations on buccolingual direction will promote bone growth inside the implant structure.

### Brief Description of Drawings

### Description Of Drawings

### Oval Platform Implant (OPI) Design

OPI has two major structural design. Degree of the convergence corresponds and matches with the final osteotomy drill which is used to prepare the recipient surgical site.

### 1. 1. Block shape:

Has one flat wall on each side which can have various degree of convergence toward the apex. (FIG -1 A)

### 1. 2. End tapered:

This implant has two different level of plan on each mesial and distal wall. these walls (Upper and Lower Part) can have various degree of convergence toward the apex of the implant which can be same or different in an implant. (Upper section and lower section can have same or different degree of convergence) (FIG -1 B)

The apical portion of the tapered OPI can have different height (from 4 mm to half of the height of the implant). (FIG -1 B)

### Indication:

The main indication of the end tapered OPI is, when there is a possibility of being too close to another vital structure like a tilted or curved root of the adjacent tooth , nerve canal or maxillary sinus.

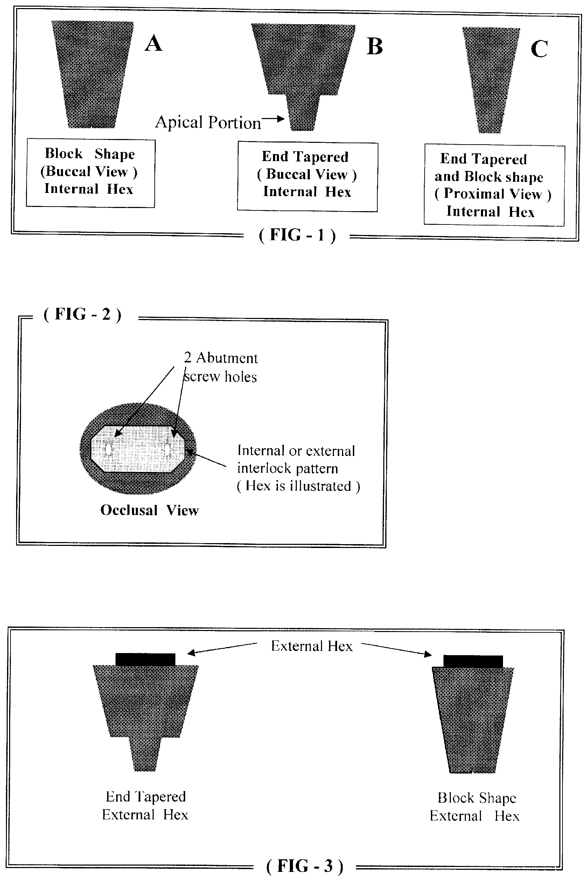

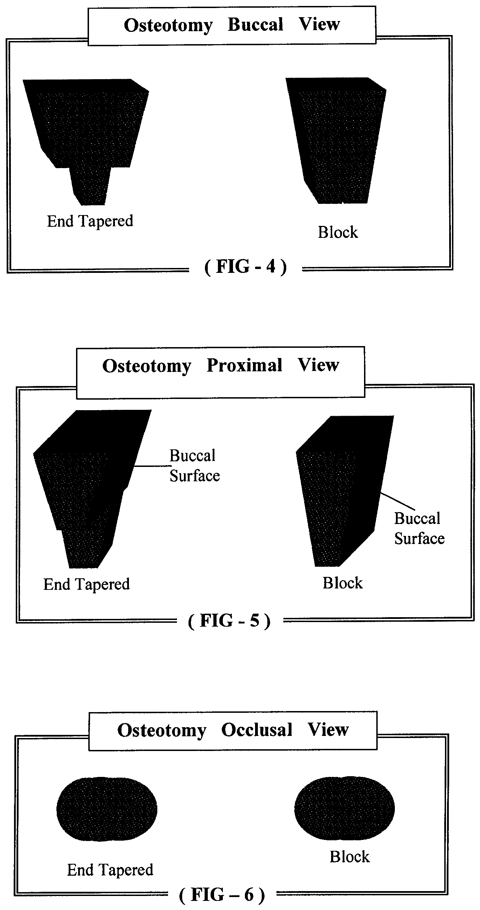

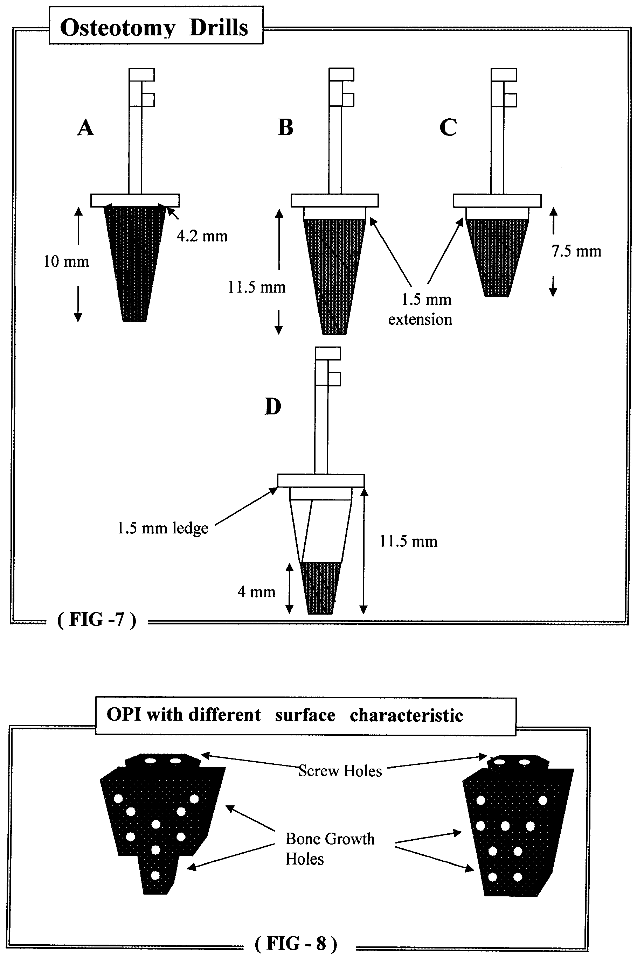

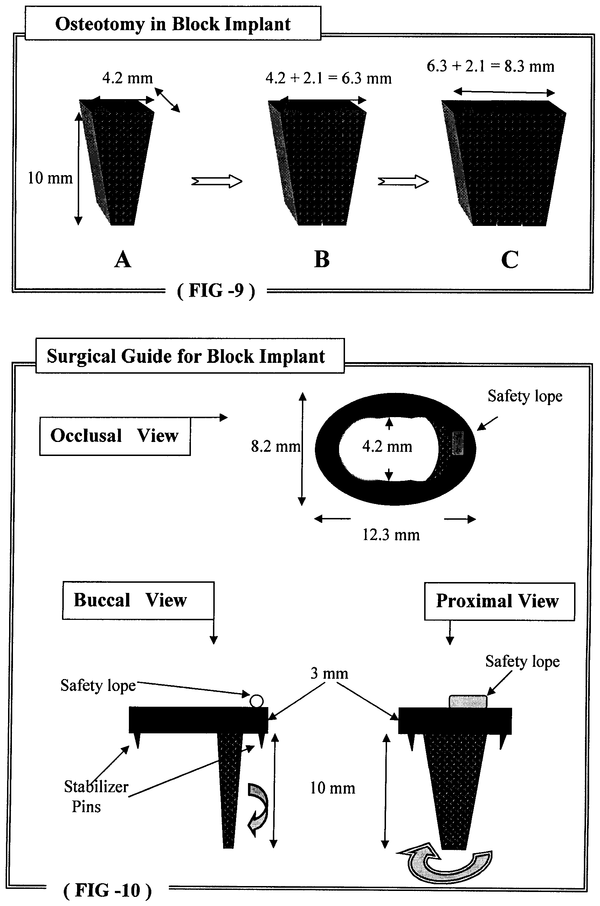

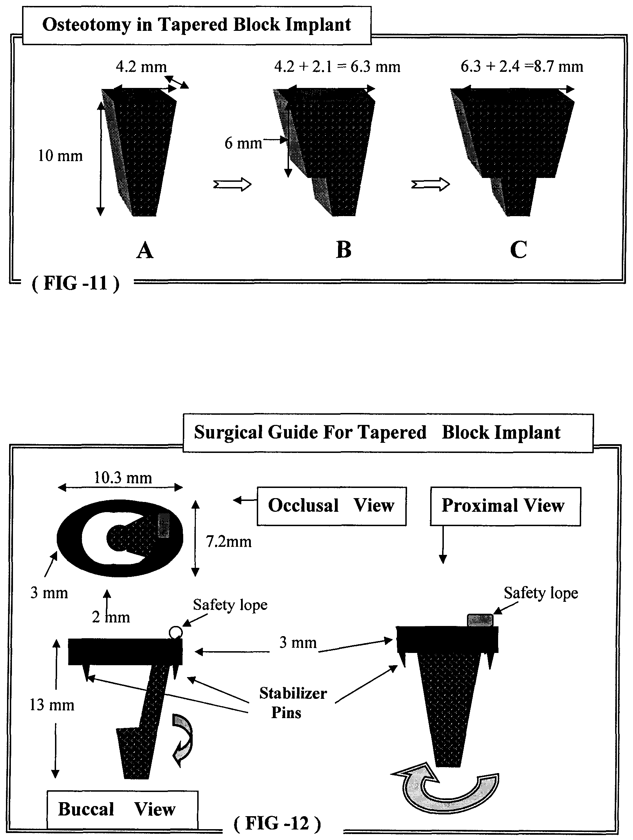

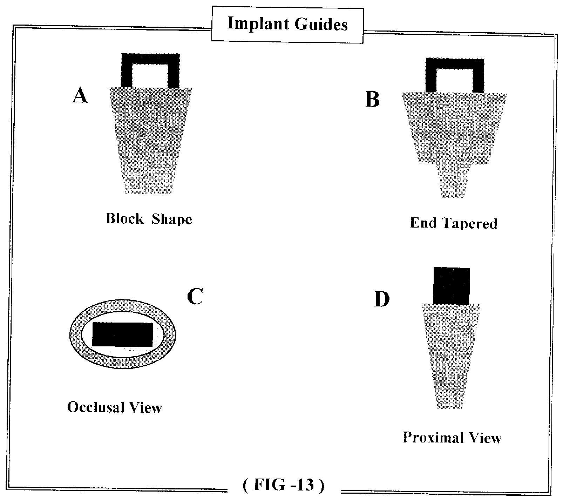

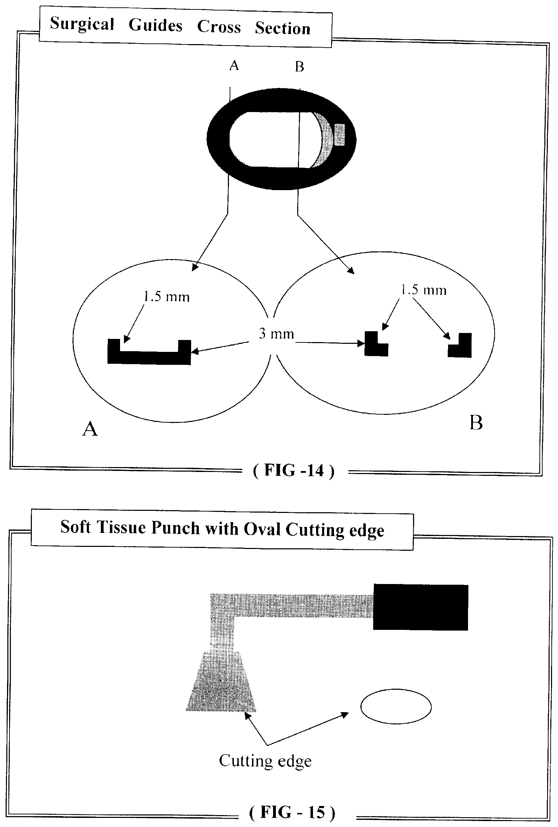

(FIG 1- C) has illustrated the proximal view of the block shape and end tapered OPI ,with the same degree of convergence.

### Oval Platform Implants: (OPI)

OPI comes in different standard sizes which will be selected base on :
1. 1. **Thickness of the OPI :** This dimension is dictated by the available bone buccolingually (3.75 mm - 4.2 mm - 5 mm and 6 mm) which shows the diameter of the final drill in preparing the recipient site. (Osteotomy site) (FIG -1 C) & (FIG - **5**)
1. 2. **width of the OPI :** This dimension shows the available room in the osteotomy site mesiodistally (which can be 5 mm to 12 mm) (FIG - 4)
1. 3. **Height of the OPI :** This dimension is the available height of the bone which will be limited by the anatomical structure like inferior alveolar nerve and maxillary sinus. (Can be 8 mm to 15 mm).

### Oval Platform Implant (OPI) Surface characteristic:

By creating some microscopic roughness or making some macroscopic small depth holes which bone will grow into these holes and roughnesses ,OPI can have different surface designs to increase implant's Osseointegrated surface.

It also can have some perforation in buccolingual direction which can be filled with hydroxyl apatite or other osteoconductive material to promote bone growth inside these perforation from buccal and lingual side. This will increase the stability and support of the implant against occlusal and lateral forces dramatically.(FIG - 8)

### Implant Material

Due to high rate of success in Osseo integration in conventional cylindrical implants with Titanium Alloy and Hydroxyl Apatite OPI will have same material in its composition.

### Surgical Guide components

Surgical guide (or drilling guide)are stainless steel component which will be used to extend the osteotomy site.

### 1. Horizontal part:

They are oval shape metal with 3 mm thickness at the margin. Length of the metal is determined by the available mesiodistal room for the implant. (can range from 7-15 mm) (FIG - 10 & 12). It has an oval hole in the center which will show the amount of the osteotomy site extension (mesiodistally). The small diameter of this oval shape opening shows the thickness of the OPI, and the long diameter of the oval shape opening shows the second dimension of the OPI which is the amount of the osteotomy extension mesiodistally.(FIG - 10 ,12 & 14) Around the oval shape opening of the surgical guide we can see a ledge with a depth and height of 1.5 mm which corresponds with the stopper of the final drill (FIG - 14)

(Final drill sits in the surgical guide and will be moved to create the osteotomy site). (FIG - 7 B,C,D)

### 2. Vertical Part:

Consist of a half conical hallow tapered stainless steel with 2 mm thickness which matches the final osteotomy drill diameter and length. It will sit inside the first osteotomy site and the oval opening (Horizontal Part) shows the amount of the extension that we need to have for the proper implant. (FIG - 10 & 12)

In End Tapered OPI surgical guide at the tip of the vertical part ,it has a drill stopper which is connected to the vertical part and is same size of the final drill which will sit completely inside the osteotomy site and helps to stabilize the surgical guide during the osteotomy procedure.(FIG - 12).

(FIG - 7C) shows the corresponding drill for Osteotomy extension for end tapered OPI.

### 3. Safety Tube

Surgical guides has a small tube which is to secure it from aspiration by passing a dental floss and also can be used to insert a periodontal probe from lingual or buccal side to help stabilizing the surgical guides during osteotomy procedure in addition to the vertical part of the surgical guides which stabilizes the surgical guides. (FIG - 10 & 12)

### Surgical Protocol for OPI system

The main critical part of having an OPI is the bone preparation or Osteotomy which needs special attention. Clinician needs to follow the simple protocol bellow to avoid any complication during the surgery.

### (Bellow procedure is illustrated for a 4.2 x 8.7 x 10 mm OPI)

After full thickness flap is elevated, if alveolar bone is sharp do the alveoloplasty and make it as flat as possible. The flatted alveolar bone will be a bed for the surgical guide and the implant. We need to have a thickness of minimum 7.2 mm bone buccolingually to place a 4.2 mm thickness OPI).
1. 1. Determine the buccolingual available bone. Need to have about 1.5 - 2 mm on each side of the implant at the crest of the bone.
1. 2. Determine the mesiodistal room available for implant. Base on the common knowledge of having at least 2-3 mm bone between the implant and the roots of the adjacent teeth and choose your Surgical
   guide size (FIG -10)
1. 3. Choose your drill length base on the available height of the bone. (FIG - 7A)

Note : these measurements can be done on the study model of the patient or with the help of CT scan before the surgery.

*(above procedures are common in all the implant surgeries)

### Block Shape Osteotomy :

1. 1. Base on the mesiodistal room first osteotomy will be done on the mesial part of the bone (FIG - 9 A)
1. 2. The surgical guide for block OPI is inserted into the first osteotomy site. Opening of the guide, dictates the amount of distal extension of the osteotomy. (The implant size will be dictated by the final osteotomy drill ( Length and diameter) and the surgical guide.(Distal extension of the osteotomy site) (FIG - 9 B,C)
1. 3. For distal extension osteotomy ,we need to use the second corresponding drill which will be the same diameter and shape as the first drill only 1.5 mm longer (Non Cutting Extension) which will compensate the thickness of the surgical guide.
   (FIG - 7 B)
1. 4. If the amount of the distal extension of the osteotomy site is more than the diameter of the final drill, I recommend to start the osteotomy from the occlusal part of the bone (Crest of the bone) (Like the first osteotomy site) starting with the pilot drill and enlarging the osteotomy gradually to reduce the heat generation and damage to the bone cells. But If the distal extension of the osteotomy is less than 1/2 of the diameter of the final drill, we can use the final drill for the extension through the surgical guide by gradual moving the final drill distally with adequate irrigation during expansion to prevent heat generation and damage to the bone cells.
1. 5. As the final step some times we need to use the finishing drill which is an end cut drill with the same diameter and shape of the final drill but it just cuts at the top 3 to 4 mm to remove the possible bony wall remaining on the floor of the osteotomy. (FIG - 7 D)
1. 6. By using the implant fitting guide confirm the fitting of the OPI. (FIG - 13 A)
1. 7. The actual implant is about 70-90 micron larger than the final fitting guide and drills which will create a snug fit between the implant and the bone. [ The height of the implant is same as the height of the final drill (to grantee complete sitting of the implant apically)].
1. 8. Insert the implant which has a handle secured with 2 screws for carrying the implant to the site.
1. 9. Because OPI is a push-in system. we may need to use the mallet to sit the implant completely. (Final sit 1-2 mm)at this point clinician need to use gentle taping along the long access of the implant.
1. 10. Remove the carrying handle by unscrewing it.
1. 11. Use two screws to secure the healing cap .
1. 12. Suture the site and give the regular medication and instruction after the implant surgery.

It is recommended to leave the implant for 3 months and allow for a complete Osseointegration before loading the implant.

### End tapered

1. 1. Make the initial osteotomy **in the center** of the available space for the implant to the appropriate length . (FIG -11 A)
1. 2. Use the surgical guide to extend the osteotomy to the mesial.(FIG -11 B)
1. 3. To extend the osteotomy we need to use the second surgical drill.(FIG - 7C)
1. 4. Turn the surgical guide to proceed with osteotomy expansion to the distal with the same drill. (FIG -11 C)
1. 5. Use the implant fitting guide to determine the sitting of the implant. (FIG - 13 B)
1. 6. The actual implant is about 70-90 micron bigger than the final fitting guide which will create a snug fit between the implant and the bone. [The height of the implant is same as the height of the final drill (to grantee complete sitting of the implant apically)].
1. 7. Insert the implant which has a handle secured with 2 screws for carrying the implant to the site.
1. 8. Because OPI is a push-in system. we may need to use the mallet to sit the implant completely. (Final sit 1-2 mm)at this point clinician need to use gentle taping toward the long access of the implant.
1. 9. Remove the carrying handle by unscrewing it.
1. 10. Use two screws to secure the healing cap .
15. suture the site and give the regular medication and instruction after the implant surgery.

### Prosthetic Procedure

The sequence of the procedure in uncovering the implant and inserting the healing abutment for 2 weeks and impression taking techniques are same as the common procedures which applies for conventional implants. Bellow is a brief overview.
1. 1. After three months of healing period (Osseointegration) clinician can either raise a flap, use soft tissue laser or he can use the matching size oval blade tissue punch to uncover the implant (the oval blade tissue punch is introduced as a component of the OPI system). (FIG - 15)
1. 2. Place the oval base healing abutment which is matching with the size of the implant's platform and secure it with the screws.(Healing abutments have different designs and profiles as routine healing abutments being used for conventional implants ,But with an oval base and therefore oval or cubic profile.
1. 3. After two weeks remove the healing abutment and either take the impression at the implant level with the matching oval platform impression coping with closed or open tray technique Or insert the final abutment with oval base (Which is matching with the OPI platform) and take impression from the final abutment.
1. 4. After prosthetic part is fabricated install (Cement or Screw) it to the abutment.

### Conclusion

### OPI system will:

1. 1. Improves anchorage of the implant (By providing more surface area for Osseointegration)
1. 2. Improves the stability of the super-structure of the implant (By having a wide oval shape platform and minimum 2 retaining screws)
1. 3. Improves the profile of the prosthetic crowns (By expanding the implant/ abutment interface more proximally to create ideal contour below the contact area with the neighboring tooth or crown.)
1. 4. Improves soft tissue health by making the proximal area of the implant more accessible for better hygiene and also supports the inter - dental papilla for improving the appearance and shape of the papilla.

## Claims

1. A dental implant system comprising a dental implant with an oval platform, and an abutment having an oval base, wherein the dental implant is configured to support and interlock with the abutment, **characterized in that** the dental implant comprises at least two screw holes and the abutment is configured to be secured to the platform with at least two screws threaded into the at least two screw holes of the dental implant.

2. The dental implant system according to claim 1, wherein the dental implant comprises a buccal surface and a proximal surface which are converging from the platform to the apex.

3. The dental implant system according to claim 2, wherein the surfaces of the dental implant are arranged at one or two different levels, whereby the dental implant is either block shaped or end-tapered.

4. The dental implant system according to claim 3, wherein the surfaces have same or different degree of convergence toward the apex.

5. The dental implant system according to claim 2 or 3, wherein the surface of the dental implant is rough or provided with shallow holes to increase osseointegration surface.

6. The dental implant system according to claim 2 or 3, wherein the surface of the dental implant is perforated for bone to grow in from each side of the implant to increase stability and osseointegration surface.

7. The dental implant system according to claim 1, wherein the abutment is a healing abutment or prosthetic abutment to support a crown, bridge or a fix or removable denture.

8. The dental implant system according to claim 2 or 3, wherein the dental implant has an internal or external locking system between the platform and the abutment in the shape of a hexagon, square or round interlock pattern.

9. The dental implant system according to claim 6, wherein the dental implant further comprises perforations filled with hydroxyl apatite or other osteoconductive material to promote bone growth inside the perforations.

## Patentansprüche

1. Zahnimplantatsystem, aufweisend ein Zahnimplantat mit einer ovalen Plattform und eine eine ovale Basis aufweisende Auflage, wobei das Zahnimplantat konfiguriert ist zum Abstützen auf der und Verriegeln mit der Auflage, **dadurch gekennzeichnet, dass** das Zahnimplantat mindestens zwei Schraubenlöcher aufweist und die Auflage konfiguriert ist, um an der Plattform mit mindestens zwei Schrauben, die in die mindestens zwei Schraubenlöcher des Zahnimplantats eingeschraubt werden, gesichert zu werden.

2. Zahnimplantatsystem nach Anspruch 1, wobei das Zahnimplantat eine bukkale Fläche und eine proximale Fläche aufweist, die von der Plattform zum Scheitelpunkt konvergieren.

3. Zahnimplantatsystem nach Anspruch 2, wobei die Flächen des Zahnimplantats auf einer Ebene oder auf zwei verschiedenen Ebenen angeordnet sind, wodurch das Zahnimplantat entweder blockförmig oder im Endbereich abgeschrägt ist.

4. Zahnimplantatsystem nach Anspruch 3, wobei die Flächen zum Scheitelpunkt hin den gleichen oder einen unterschiedlichen Konvergenzgrad aufweisen.

5. Zahnimplantatsystem nach Anspruch 2 oder 3, wobei die Fläche des Zahnimplantats rau ist oder flache Löcher aufweist, um die Osseointegrationsfläche zu erhöhen.

6. Zahnimplantatsystem nach Anspruch 2 oder 3, wobei die Fläche des Zahnimplantats perforiert ist, damit Knochen von jeder Seite des Implantats hineinwachsen, um die Stabilität und Osseointegrationsfläche zu erhöhen.

7. Zahnimplantatsystem nach Anspruch 1, wobei die Auflage eine heilende Auflage oder eine prothetische Auflage zum Abstützen einer Krone, einer Brücke oder einer festen oder abnehmbaren Prothese ist.

8. Zahnimplantatsystem nach Anspruch 2 oder 3, wobei das Zahnimplantat ein inneres oder äußeres Verriegelungssystem zwischen der Plattform und der Auflage in der Form eines sechseckigen, quadratischen oder runden Musters aufweist.

9. Zahnimplantatsystem nach Anspruch 6, wobei ferner das Zahnimplantat Perforationen aufweist, die mit Hydroxylapatit oder einem anderen osteokonduktiven Material gefüllt sind, um das Knochenwachstum innerhalb der Perforationen zu fördern.

## Revendications

1. Système d'implant dentaire comprenant un implant dentaire avec une plateforme ovale, et un pilier ayant une base ovale, dans lequel l'implant dentaire est configuré pour supporter et se verrouiller avec le pilier, **caractérisé en ce que** l'implant dentaire comprend au moins deux trous de vis, et le pilier est configuré pour être fixé sur la plateforme avec au moins deux vis vissées dans les au moins deux trous de vis de l'implant dentaire.

2. Système d'implant dentaire selon la revendication 1, dans lequel l'implant dentaire comprend une surface buccale et une surface proximale qui convergent de la plateforme au sommet.

3. Système d'implant dentaire selon la revendication 2, dans lequel les surfaces de l'implant dentaire sont agencées à un ou deux différents niveaux, moyennant quoi l'implant dentaire est en forme de bloc ou progressivement rétréci.

4. Système d'implant dentaire selon la revendication 3, dans lequel les surfaces ont le même degré de convergence ou un degré de convergence différent vers le sommet.

5. Système d'implant dentaire selon la revendication 2 ou 3, dans lequel la surface de l'implant dentaire est rugueuse ou prévue avec des trous peu profonds afin d'augmenter la surface d'ostéo-intégration.

6. Système d'implant dentaire selon la revendication 2 ou 3, dans lequel la surface de l'implant dentaire est perforée pour que l'os se développe à partir de chaque côté de l'implant afin d'augmenter la stabilité et la surface d'ostéo-intégration.

7. Système d'implant dentaire selon la revendication 1, dans lequel le pilier est un pilier de cicatrisation ou une pilier prothétique afin de supporter une couronne, un bridge ou une dentition fixe ou amovible.

8. Système d'implant dentaire selon la revendication 2 ou 3, dans lequel l'implant dentaire a un système de verrouillage interne ou externe entre la plateforme et le pilier se présentant sous la forme d'un motif de verrouillage hexagonal, carré ou rond.

9. Système d'implant dentaire selon la revendication 6, dans lequel l'implant dentaire comprend en outre des perforations remplies avec de l'hydroxyapatite ou un autre matériau ostéo-conducteur afin de favoriser la croissance osseuse à l'intérieur des perforations.
